# EUROPEAN PATENT APPLICATION

(11) **EP 0 812 532 A1**
(43) Date of publication of application: **17.12.1997**
(21) Application number: 97201530.9
(22) Date of filing: 22.05.1997
(51) Int. Cl.: A01D 82/00

(54) **A device for crushing mown crop**

(30) Priority: 14.06.1996 NL 1003347
(71) Applicant: Greenland Geldrop B.V., NL-5667 KP Geldrop (NL)
(72) Inventor: Meyerink, Hendrikus, 5591 JA Heeze (NL); Toonders, Herman Jozef Maria, 5421 SN Gemert (NL)
(74) Representative: Veldman-Dijkers, Cornelia G.C., Ir.

(57) **Abstract**

A device for crushing mown crop, said device comprising a pick-up roller (6), which is rotatable about an at least substantially horizontal axis of rotation, mating crushing rollers (9,10), which are rotatable about at least substantially horizontal axes of rotation, as well as a pair of wheels supporting said device, which are rotatable about an at least substantially horizontal axis. The device furthermore comprises a rotatable supporting roller (7) extending parallel to the pick-up roller,which supports said pick-up roller, whereby said pick-up roller, at least one of said crushing rollers and said supporting roller are pivotally interconnected by means of a parallelogram mechanism, in such a manner that the relative position between said supporting roller and said pick-up roller remains constant.

## Description

The invention relates to a device for crushing mown crop, said device comprising a pick-up roller, which is rotatable about an at least substantially horizontal axis of rotation, mating crushing rollers, which are rotatable about at least substantially horizontal axes of rotation, as well as a pair of wheels supporting said device, which are rotatable about an at least substantially horizontal axis.

In a device of this type mown crop is lifted by means of a pick-up roller and carried through the crushing rollers. The crop processed between the crushing rollers is then discharged. The pick-up roller must remain spaced from the ground in order to prevent the pick-up roller from getting stuck in the ground and picking up sand and stones.

In a similar device known from German Patent Application DE-A1-27.57.211 the distance between the wheels and the pick-up roller is relatively large. When the device is moved over uneven ground, the pick-up roller makes contact with the ground relatively quickly, whereby a relatively great deal of sand and stones are picked up from the ground, which subsequently find their way between the crushing rollers. This may cause damage to the device and contamination of the mown crop.

The object of the invention is to provide a device wherein the distance between the pick-up roller and the ground remains substantially constant.

This objective is according to the invention accomplished in that the device furthermore comprises a rotatable supporting roller extending parallel to the pick-up roller, which supports said pick-up roller, whereby said pick-up roller, at least one of said crushing rollers and said supporting roller are pivotally interconnected by means of a parallelogram mechanism, in such a manner that the relative position between said supporting roller and said pick-up roller remains constant.

Since the supporting roller is positioned near the pick-up roller, any unevennesses of the ground are absorbed by the supporting roller practically immediately. Because said supporting roller and said pick-up roller are interconnected by means of a parallelogram mechanism, the relative position between said supporting roller and said pick-up roller will remain constant. At the same time also the distance between said pick-up roller and said crushing roller will remain substantially unchanged, so that a relatively satisfactory in-feed of crop between the crushing rollers remains ensured.

One embodiment of the device according to the invention is characterized in that said supporting roller extends substantially along the entire length of the pick-up roller.

Any unevennesses are thereby detected by the supporting roller along the entire length of the pick-up roller, which unevennesses are transmitted to the pick-up roller via said parallelogram mechanism by moving said pick-up roller away from the ground.

Another embodiment of the device according to the invention is characterized in that said supporting roller abuts against said pick-up roller.

As a result of this arrangement any contaminations adhering to the supporting roller are removed therefrom again.

The invention will be explained in more detail with reference to the drawing, in which:
Figure 1 is a plan view of a device according to the invention;
Figure 2 is a side view of a part of the device shown in Figure 1;
Figure 3 is a side view of a part of the device shown in Figure 1, wherein the device is being moved over an unevenness;
Figure 4 is a side view of a part of the device shown in Figure 1, wherein the device is being moved over another unevenness;
Figures 5A-5D shows various positions of a spreader element of the device shown in Figure 1; and
Figure 6 shows the device of Figure 1 and swaths of mown crop.

Like parts are numbered alike in the Figures.

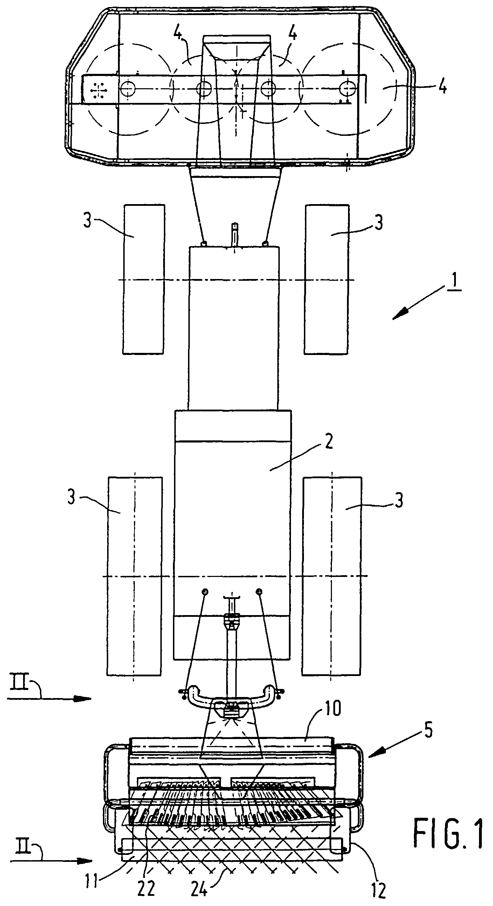

Figure 1 shows a device comprising a tractor 2 having four driven wheels 3, which device is provided with drum-shaped mowing elements 4 at its front side, seen in a direction of transport P1. At its rear side device 1 is provided with a crushing device 5 according to the invention. Tractor 2 and mowing elements 4 do not form part of the invention, and consequently will not be discussed in detail herein. It is also possible to drive crushing device 5 by means other than a tractor. Furthermore it is possible to move the crop in a manner other than by means of mowing elements 4.

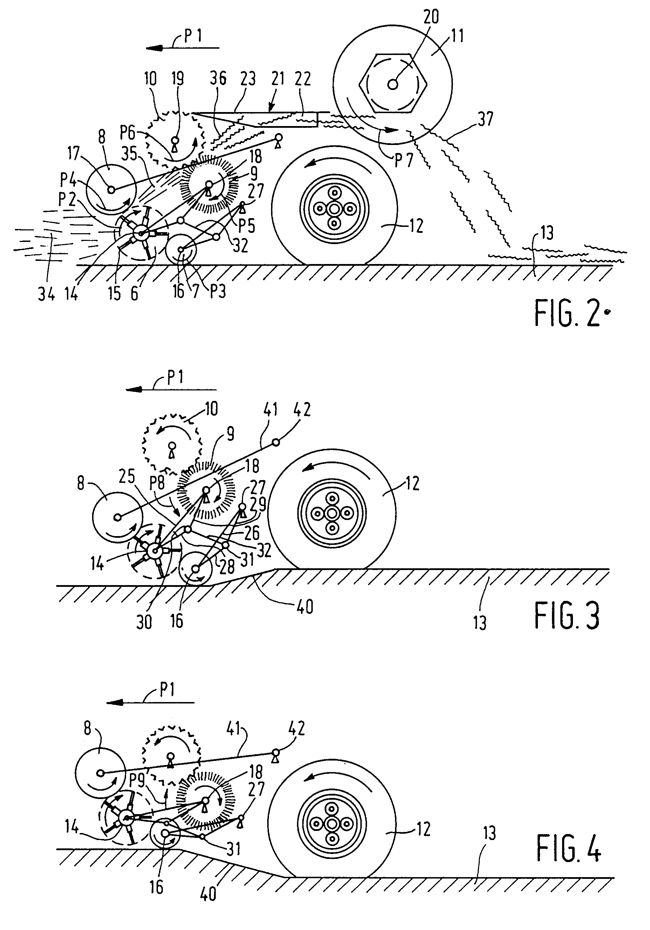

Crushing device 5 comprises a number of rollers 6 - 11, which are rotatable about at least substantially horizontal axes of rotation, which rollers will be explained in more detail hereafter with reference to Figure 2. Crushing device 5 is movably supported on a ground surface 13 by means of two wheels 12.

Figure 2 is a side view of the crushing device 5 shown in Figure 1. Crushing device 5 comprises a pick-up roller 6, which is rotatable about an axis of rotation 14 in a direction indicated by arrow P2. Pick-up roller 6 is provided with a number of rows 15 of radially extending bristles. Pick-up roller 6 abuts against a supporting roller 7, which is rotatable about an axis of rotation 16 in a direction indicated by arrow P3. A smooth guide roller 8 is disposed opposite pick-up roller 6, on a side facing away from supporting roller 7, which guide roller is rotatable about an axis of rotation 17, in a direction indicated by arrow P4. Two crushing rollers 9, 10 are spaced from guide roller 8 and pick-up roller 6 by some distance, said crushing rollers being rotatable about axes of rotation 18 and 19 respectively, in directions indicated by arrows P5 and P6 respectively. Crushing roller 9 is driven by means of a motor (not shown) via a transmission (not shown). Pick-up roller 6 is in turn driven by means of a chain transmission or a V-belt transmission. Crushing roller 10 is friction-driven by crushing roller 9. Guide roller 8 is friction-driven by pick-up roller 6.

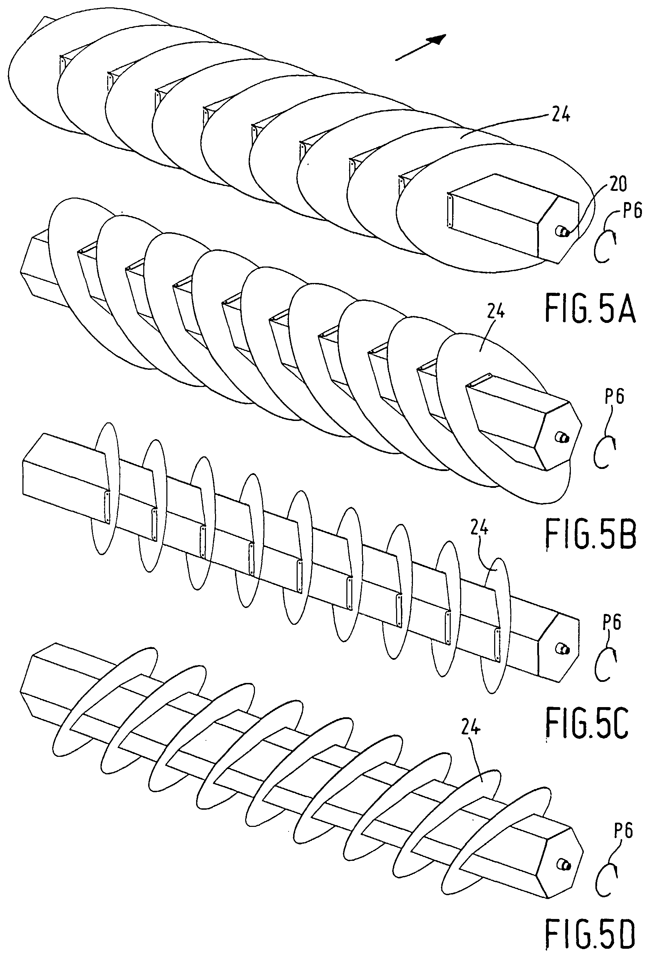

A spreader element 11 is disposed at some distance from crushing rollers 9, 10, which spreader element is rotatable about an axis of rotation 20, in a direction indicated by arrow P7. A crop guide 21 is disposed between crushing rollers 9, 10 and spreader element 11, which crop guide comprises a number of baffles 22, which are connected at different angles to an upper plate 23 of crop guide 21 (See Figure 1). Spreader element 11 is shown in several angular positions in Figures 5A - 5D. Spreader element 11 is provided with a number of parallel baffles 24, which include an acute angle with axis of rotation 20. Axes of rotation 18, 19 and 20 and wheels 12 are fixedly disposed in crushing device 5. Axis of rotation 14 of pick-up roller 6 is pivotally connected to axis of rotation 18 of crushing roller 9 by means of a rod 25. Axis of rotation 16 of supporting roller 7 is pivotally connected, by means of a rod 26 being identical in length to rod 25, to a pivot 27 which is fixedly connected to device 5. Attached to the ends of each of the rods 25, 26 are two rods 28, 29, which rods are interconnected at their ends remote from rods 25, 26 in joints 30 and 31 respectively. Joints 30, 31 are pivotally interconnected by means of a rod 32, which extends parallel to a connecting line between axis of rotation 18 and pivot 27, and which has a length equal to the distance between axis of rotation 18 and pivot 27. Rods 25-32 form a system of rods, with the rods having such a length and being arranged in such a manner that they form a parallelogram mechanism.

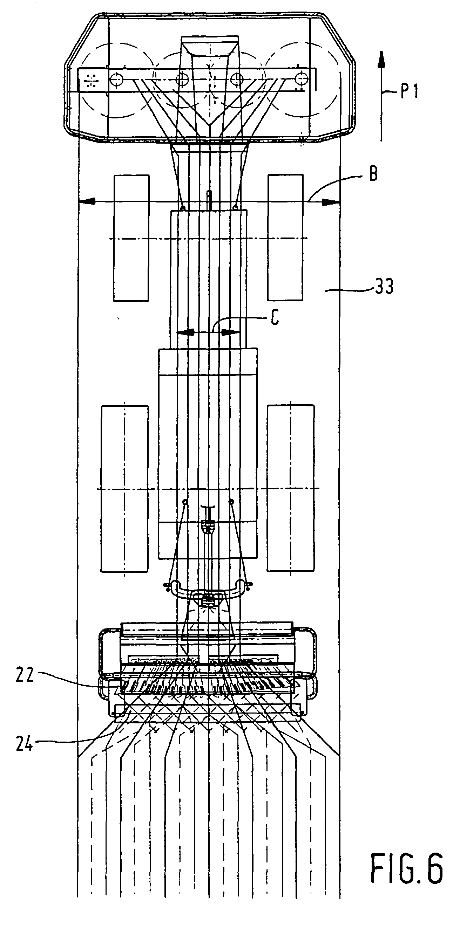

The operation of device 5 will now be explained in more detail with reference to Figures 2 - 4 and Figure 6. Crop (not shown) is mowed across a width B by means of mowing elements 4, and deposited across a width C on the mowing area by said mowing elements 4. The mown crop 34 is picked up across width C by means of pick-up roller 6 and passed between guide roller 8 and pick-up roller 6 to crushing rollers 9, 10. The circumferential velocity of crushing rollers 9, 10 is preferably higher than the circumferential velocity of pick-up roller 6, so that a smooth transfer of crop 35 from pick-up roller 6 to crushing rollers 9, 10 is obtained. The circumferential velocity of crushing rollers 9, 10 may for example be twice as high as the circumferential velocity of pick-up roller 6. The crop 36 processed by crushing rollers 9, 10 is flung towards crop guide 21, where the mown crop, which has been conditioned by said crushing rollers, is deflected in various directions by means of baffles 22. Crop guide 21 guides the crop to spreader element 11 at a height below axis of rotation 20. The mown crop strikes against baffles 24 of spreader element 11. The velocity of the crop causes spreader element 11 to rotate about axis of rotation 20, after which the crop lands on a selected place on mowing area 33, said place depending on the momentaneous position of baffles 24. Because spreader element 11 is rotated, the crop is alternately deflected to the left or the right. Because of this arrangement the mown crop 37, which has been conditioned by the crushing rollers, is spread in a uniform thickness along the entire width of mowing area 33.

When the device 5 is moved over an unevenness 40 on the ground, whereby the ground surface at the front side of the device 5 is positioned lower than the ground surface at the rear, supporting roller 7 and rod 26 will pivot about pivot 27 in a direction indicated by arrow P8, until supporting roller 7 touches the ground. Because pick-up roller 6 is connected to supporting roller 7 by means of said parallelogram mechanism, pick-up roller 6 will likewise move with respect to device 5. The distance Y from pick-up roller 6 to the ground surface 13 will remain substantially unchanged, however, due to the presence of said parallelogram mechanism. The fact is that said distance Y is determined by the distance in vertical direction between the supporting roller 7 and the pick-up roller 6 and the diameters of both rollers. The vertical distance between the rollers is equal to the vertical distance of the pivot 27 and axis of rotation 18, which distance is fixed as a result of the fixed position of pivot 27 and axis of rotation 18 with respect to device 5. When supporting roller 7 and pick-up roller 6 pivot about pivot 27 and axis of rotation 18 respectively, guide roller 8 will at the same time be pivoted about a fixed pivot 42 by means of a rod 41. As a result of this arrangement guide roller 8 will abut against pick-up roller 6 at all times.

In case of an unevenness 42 whereby the ground surface at the front is positioned higher than the ground surface at the rear, the parallelogram mechanism will pivot in a direction P9 opposite the direction indicated by arrow P8. Also in this case the distance between pick-up roller 6 and the ground will remain substantially unchanged.

Local unevennesses in a direction transversely to the direction of transport P1 are detected by the supporting roller, which extends along the entire length of the pick-up roller, and this results in an adjustment of the position of the parallelogram mechanism, in such a manner that a minimal distance from the pick-up roller to the ground surface is ensured.

## Claims

1. A device for crushing mown crop, said device comprising a pick-up roller, which is rotatable about an at least substantially horizontal axis of rotation, mating crushing rollers, which are rotatable about at least substantially horizontal axes of rotation, as well as a pair of wheels supporting said device, which are rotatable about an at least substantially horizontal axis, characterized in that said device furthermore comprises a rotatable supporting roller extending parallel to the pick-up roller, which supports said pick-up roller, whereby said pick-up roller, at least one of said crushing rollers and said supporting roller are pivotally interconnected by means of a parallelogram mechanism, in such a manner that the relative position between said supporting roller and said pick-up roller remains constant.

2. A device according to claim 1, characterized in that said supporting roller extends along substantially the entire length of said pick-up roller.

3. A device according to any one of the preceding claims, characterized in that said supporting roller abuts against said pick-up roller.

4. A device according to any one of the preceding claims, characterized in that said device is provided with a guide roller which mates with said pick-up roller, which guide roller is positioned opposite said pick-up roller, on a side remote from said supporting roller.

5. A device according to claim 4, characterized in that said guide roller abuts against said pick-up roller.

6. A device according to any one of the preceding claims, characterized in that said parallelogram mechanism comprises a system of rods.

7. A device according to any one of the preceding claims, characterized in that said device comprises a rotatable spreader element, which is disposed behind said crushing rollers, in the path of movement of crop moving towards the rear during operation of said crushing rollers, and which is rotatable about an at least substantially horizontal axis of rotation.

8. A device according to claim 7, characterized in that said spreader element is provided with a number of parallel baffles, which include an acute angle with said axis of rotation.

9. A device according to claim 7 or 8, characterized in that said device is provided with a crop guide, which is disposed between said crushing rollers and said spreader element.

10. A device for crushing mown crop, said device comprising a pick-up roller, which is rotatable about an at least substantially horizontal axis of rotation, mating crushing rollers, which are rotatable about at least substantially horizontal axes of rotation, as well as a pair of wheels supporting said device, which are rotatable about an at least substantially horizontal axis, characterized in that said device furthermore comprises a rotatable spreader element, which is disposed behind said crushing rollers, in the path of movement of crop moving towards the rear during operation of said crushing rollers, and which is rotatable about an at least substantially horizontal axis of rotation, whereby said spreader element is provided with a number of parallel baffles, which include an acute angle with said axis of rotation.
